**Europäisches Patentamt**

(19) **European Patent Office**

**Office européen des brevets**

(11) Publication number: **0 117 520**
**B1**

(12) **EUROPEAN PATENT SPECIFICATION**

(45) Date of publication of patent specification: **20.05.87**

(21) Application number: **84101838.5**

(22) Date of filing: **22.02.84**

(51) Int. Cl.⁴: **H 02 K 41/035,** G 11 B 5/55, H 02 K 15/04

(54) **Voice coil actuator and method of manufacturing a coil for such an actuator.**

(30) Priority: **28.02.83 US 470655**

(43) Date of publication of application:
**05.09.84 Bulletin 84/36**

(45) Publication of the grant of the patent:
**20.05.87 Bulletin 87/21**

(84) Designated Contracting States:
**DE FR GB**

(56) References cited:
**DE-B-1 915 548**
**US-A-3 743 794**
**US-A-4 144 466**

(73) Proprietor: **International Business Machines Corporation**
**Old Orchard Road**
**Armonk, N.Y. 10504 (US)**

(72) Inventor: **Castagna, Joseph Thomas**
**330 Oakberry Way**
**San Jose California 95123 (US)**

(74) Representative: **Hobbs, Francis John**
**IBM United Kingdom Limited Intellectual Property Department Hursley Park Winchester Hampshire SO21 2JN (GB)**

Courier Press, Leamington Spa, England.

## Description

This invention relates to a voice coil actuator and to a method of manufacturing a coil for such an actuator.

Magnetic disk data storage files are used extensively in data processing systems. The disks generally have a plurality of concentric recording tracks which are numbered so that the address of the data involves at least a track number and sometimes a disk number where the file includes more than one disk or recording surface. The data address is supplied to a transducer positioning system which has the function of positioning a magnetic transducer to the centre of the addressed track.

In order to increase data storage capacity of the disk surface, the centre-to-centre spacing between adjacent disk tracks has been decreased to the point where track densities currently are in the range of 320 to 400 tracks per cm (800 to 1000 tracks per inch). At these densities, the transducer positioning system must, of necessity, be of the track following type in order to maintain the transducer centred on the track throughout the entire revolution of the disk. Track following servo positioning systems operate by sensing a prerecorded servo pattern which has been placed on another surface or interleaved with data on the track. The sensing of the servo pattern is achieved by either a separate servo transducer which is moved conjointly with the data heads or, in some systems, by the data head itself. Variations of the servo head from the centre of the track are converted to position error signals that are supplied to the transducer positioning means, for example a voice coil actuator (VCA) and function to correct the position error and move the heads back over the centre of the track.

It will, therefore, be appreciated by persons skilled in the art that since the servo transducer is moved by the coil of the VCA, it is important to ensure that spurious movements of the head relative to the servo pattern do not occur, especially where the spurious movements are cyclic and at a frequency which is outside the range of frequency correctable by the servo system. Considerable effort is, therefore, taken to ensure that the components of the system are designed to avoid vibrations, particularly those frequencies which correspond to natural resonances that might occur as the coil is energized by the position error signals during the track following operation and during the track positioning operation.

Analysis of the dynamic performance of positioning systems employed in current commercial disk files indicates that a major source of vibration in the file is the coil of the VCA. The coil assembly must, of necessity, be rigidly attached to the head arms and to the movable carriage in order to obtain positioning accuracy and repeatability.

The coil assembly generally has a tendency to vibrate and resonate in a longitudinal direction parallel to the coil axis when energized. Various arrangements have been suggested in the prior art to minimize this tendency (see, for example, US—A—4,144,466 and the prior art referenced in that patent).

In order to increase the track density and obtain even greater data storage capacity in the disk, it is desirable and often necessary to further decrease the amplitude of longitudinal resonance vibrations in the actuator upon energization of the coil. In the past, this has generally required a complete redesign of the various mechanical components of the positioning system along with considerable modelling and testing to minimize vibration problems.

The present invention seeks to provide an improved construction for the coil of a voice coil actuator for transducer positioning in order to decrease vibrations in a direction parallel to the coil axis.

According to one aspect of the invention, we provide, a voice coil actuator for positioning transducer heads in a disk data storage file, the actuator having a coil comprising a winding on a bobbin, the coil being characterised by the provision of a layer of viscoelastic material bonded to the core of the bobbin and an aluminium foil surrounding and bonded to the layer of viscoelectric material, the winding being made tightly around the aluminium foil.

According to another aspect of the invention a method of manufacturing a coil for a voice coil actuator for positioning transducer heads in a disk data storage file, is characterised by the steps of (a) wrapping a layer of viscoelastic material around the core of a bobbin, (b) wrapping an aluminium foil over the layer of viscoelastic material to provide a rigid base for a winding, (c) forming a winding tightly on the aluminium foil, and (d) heat treating the coil to bond the layer of viscoelastic material to the core of the bobbin.

How the invention can be carried out will now be described by way of example with reference to the accompanying drawings, in which:—

FIG. 1 is a perspective view of a transducer positioning system employing a voice coil actuator;

FIG. 2 represents a section of a voice coil embodying the present invention;

FIG. 3 is a schematic illustration of an improved method for constructing the voice coil shown in Fig. 2.

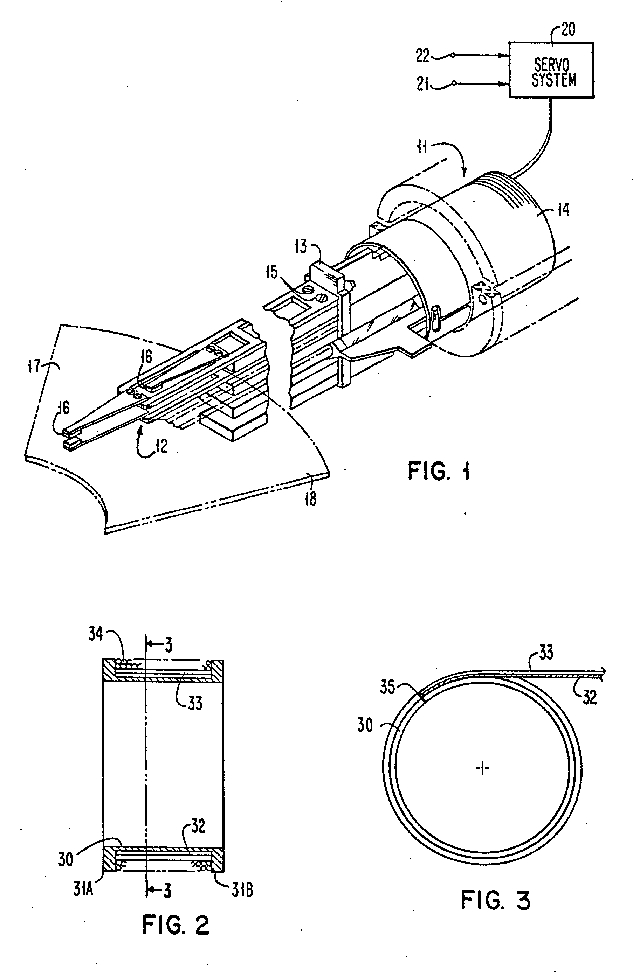

A transducer positioning system (Fig. 1) comprises a voice coil actuator 11, a group of head arm members 12, and a T-block member 13 which functions to mount the head arm members 12 for movement by the coil 14 of the voice coil actuator 11. The head arm members 12 are attached to block 13 by screws 15. Each head arm member 12 carries a pair of magnetic transducers or heads which cooperate with one surface of one of the disks of a data storage file. For example, the heads 16 cooperate with the surface 17 of disk 18. T-block 13 is supported by a suitable bearing system (not shown) which guides the movement of the block 13 and heads 16 along a path which corresponds substantially to a radius of disk 18.

Coil 14 of the actuator 11 is energized from a suitable electronic servo system 20 which functions to move the transducer from one track to another in response to an address signal supplied to terminal 21 of servo system 20. Servo system 20 also functions to maintain the transducer on the centre of the addressed track (track follow) in response to signals from a servo transducer supplied to terminal 22. When signals are applied to coil 14, the coil moves in a direction depending on the polarity of the signal and at a velocity depending on the magnitude of the signal. Since average access times for state of the art transducer positioning systems are in the range of 15 to 30 milliseconds, very rapid acceleration and deceleration forces are involved which tend to cause resonant vibration of the elements of the system. The forces involved are developed in the coil winding per se as a result of flux in the air gap of the voice coil actuator. These forces are generally in the axial direction and tend to develop resonant vibrations along the axis of the assembly. The manner in which the coil is attached to the coil bobbin determines, to a large extent, the positioning accuracy of the overall system and its tendency to vibrate or resonate along the axis.

Fig. 2 illustrates the cross-section of the coil of a voice coil actuator embodying the invention, while Fig. 3 shows how the improved coil of Fig. 2 may be constructed.

As shown in Fig. 2, the coil comprises a cylindrical bobbin having a core 30 and end flanges 31A and 31B, a composite layer of viscoelastic material 32 and an aluminium foil 33, and, finally, the coil winding 34.

The composite layer of viscoelastic material 32 and aluminium foil 33 is applied wrapped around the core 30 of the bobbin as shown in Fig. 3. The composite layer is in the form of a self-adhesive tape which will adhere to the core 30 and will be permanently bonded thereto during the normal coil baking process. The thickness of the composite layer is in the range of 125 to 250 microns (5 to 10 mils). With the viscoelastic material being in the order of twice the thickness of the aluminium foil 33. One turn of the composite layer is applied to the bobbin, and then the composite layer is slit at 35 to correspond to the axially extending slit normally provided in the bobbin to minimize the effect of eddy currents on the operation of the actuator.

The aluminium foil 33 provides a firm base for machine winding of the coil which is subsequently fixed relative to the bobbin by suitable means. Along with the flanges 31A and 31B, the aluminium foil 33 tends to seal the viscoelastic material 32 so as to avoid subjecting this material to any adverse environments during the assembly process. The viscoelastic material may be of any suitable known viscoelastic material such as the material marketed by the 3M Company under the trademark "Scotchclamp" which employs proprietary viscoelastic polymer materials referred to as either type 110 or type 112.

The composite layer of damping material and aluminium function as an energy dissipating device in shear only, i.e., parallel to the direction of motion of the coil. The coil is not isolated from the actuator as in many prior art arrangements which attempt to reduce horizontal vibrations. The aluminium foil functions to constrain the viscoelastic material which increases its shear deformation, and the modulus of rigidity of the damping material is also increased. The ability of the material to dissipate energy is, therefore, increased along with overall damping losses.

The aluminium foil also functions as a support for the coil wire as it is being wound on the bobbin. Since the aluminium foil, in effect, covers the viscoelastic material, the aluminium foil serves also as a seal to prevent possible contamination from entering the environment of the head disk interface and adversely affecting the transducing operation. The aluminium foil also acts to prevent any potential chemical reactions between the viscoelastic material and wire insulation from occurring.

## Claims

1. A voice coil actuator (11) for positioning transducer heads in a disk data storage file, the actuator having a coil (14) comprising a winding (34) on a bobbin, the coil being characterised by the provision of a layer of viscoelastic material (32) bonded to the core (30) of the bobbin and an aluminium foil (33) surrounding and bonded to the layer of viscoelastic material (32), the winding (34) being made tightly around the aluminium foil (33).

2. A voice coil actuator as claimed in claim 1, in which the layer of viscoelastic material (32) and the aluminium foil (33) and the bobbin are slit parallel to the coil axis to minimize eddy currents.

3. A voice coil actuator as claimed in claim 1 or claim 2, further including means for maintaining the winding (34) in fixed relationship to the bobbin.

4. A method of manufacturing a coil for a voice coil actuator for positioning transducer heads in a disk data storage file, characterised by the steps of (a) wrapping a layer of viscoelastic material (32) around the core (30) of a bobbin, (b) wrapping an aluminium foil (33) over the layer of viscoelastic material (32) to provide a rigid base for a winding, (c) forming a winding (34) tightly on the aluminium foil (33), and (d) heat treating the coil to bond the layer of viscoelastic material (32) to the core (30) of the bobbin.

5. A modification of the method claimed in claim 4, in which the steps (a) and (b) are replaced by the step of applying to the core (30) of the bobbin a premanufactured composite tape comprising an aluminium foil bonded to a layer of viscoelastic material.

**Patentansprüche**

1. Schwingspulenstellglied (11) zum Positionieren von Meßwandlerköpfen in einer Plattenspeicherdatei, mit einer Spule (14) mit Wicklung (34) auf einem Spulenkörper, gekennzeichnet durch eine Schicht viskoelastischen Materials (32), das auf den Kern (30) des Spulenkörpers aufgebracht ist, und durch eine Aluminiumfolie (33), welche die Schicht aus viskoelastischem Material (32) umgibt und auf diese aufgebracht ist, wobei die Wicklung (34) fest um die Aluminiumfolie (33) angeordnet ist.

2. Schwingspulenstellglied nach Anspruch 1, dadurch gekennzeichnet, daß die Schicht aus viskoelastischem Material (32) und . die Aluminiumfolie (33) und der Spulenkörper parallel zur Spulenachse geschlitzt sind, um Wirbelströme auf ein Minimum zu reduzieren.

3. Schwingspulenstellglied nach Anspruch 1 oder 2, gekennzeichnet durch Einrichtungen zur Fixierung der Wicklung (34) auf dem Spulenkörper.

4. Verfahren zur Herstellung einer Spule für ein Schwingpulenstellglied zum Positionieren von Meßwandlerköpfen in einer Plattenspeicherdatei, gekennzeichnet, durch folgende Schritte:

a) Wickeln einer Schicht aus viskoelastischem Material (32) um den Kern (30) eines Spulenkörpers;

b) Wickeln einer Aluminiumfolie (33) über die Schicht aus viskoelastischem Material (32) zur Erzeugung einer festen Grundlage für eine Wicklung;

c) Aufbringen einer festen Wicklung (34) um die Aluminiumfolie (33) und

d) Behandeln der Spule mit Wärme zur Bindung der Schicht aus viskoelastischem Material (32) an den Kern (30) des Spulenkörpers.

5. Verfahren nach Anspruch 4, dadurch gekennzeichnet, daß die Schritte a) und b) durch einen Schritt ersetzt werden, bei welchem ein vorgefertigtes mehrschichtiges Band mit einer auf eine Schicht aus viskoelastischem Material aufgebrachten Aluminiumfolie an den Kern (30) des Spulenkörpers aufgebracht wird.

**Revendications**

1. Actionneur (11) à bobine mobile pour positionner des têtes de transducteur dans un fichier de stockage de données à disques, l'actionneur ayant une bobine (14) comprenant une enroulement (34) sur une carcasse de bobine, la bobine étant caractérisée en ce que l'on prévoit une couche de matière viscoélastique (32) liée au noyau (30) de la carcasse et une feuille d'aluminium (33) entourant la couche de matière viscoélastique (32) et liée à cette couche, l'enroulement (34) étant serré autour de la feuille d'aluminium (33).

2. Actionneur selon la revendication 1, caractérisé en ce que la couche de matière viscoélastique (32), la feuille d'aluminium (33) et la carcasse sont fendues parallèlement à l'axe de la bobine pour réduire les courants de Foucault.

3. Actionneur selon la revendication 1 ou 2, caractérisé en ce qu'il comprend en outre un moyen pour maintenir l'enroulement (34) fixe par rapport à la carcasse.

4. Procédé de fabrication d'une bobine pour un actionneur à bobine mobile destiné à positionner des têtes de transducteur dans un fichier de stockage de données à disques, caractérisé par les étapes suivantes: (a) enveloppement du noyau (30) de la carcasse de bobine avec une couche de matière viscoélastique (32), (b) enveloppement de la couche de matière viscoélastique (32) avec une feuille d'aluminium (33) pour fournir une base rigide à l'enroulement, (c) formation d'un enroulement (34) serré autour de la feuille d'aluminium (33) et (d) soumission de la bobine à un traitement thermique pour lier la couche de matière viscoélastique (32) au noyau (30) de la carcasse de bobine.

5. Variante du procédé selon la revendication 4, caractérisé en ce que les étapes (a) et (b) sont remplacées par l'étape d'application sur le noyau (30) de la carcasse de bobine d'une bande composite préfabriquée comprenant une feuille d'aluminium liée à une couche de matière viscoélastique.

0 117 520

FIG. 1

FIG. 2

FIG. 3